Europäisches Patentamt

European Patent Office

Office européen des brevets

(19)

(11) EP 1 217 709 A1

(12) EUROPEAN PATENT APPLICATION

(43) Date of publication:
26.06.2002 Bulletin 2002/26

(51) Int Cl.$^7$: H02J 3/24

(21) Application number: 00811241.9

(22) Date of filing: 22.12.2000

(84) Designated Contracting States:
AT BE CH CY DE DK ES FI FR GB GR IE IT LI LU
MC NL PT SE TR
Designated Extension States:
AL LT LV MK RO SI

(71) Applicant: ABB Schweiz AG
5400 Baden (CH)

(72) Inventors:
• Quaintance, William Harford
Raleigh, NC 27502 (US)
• Bertsch, Joachim
5405 Baden-Dättwil (CH)

(74) Representative: ABB Patent Attorneys
c/o ABB Schweiz AG
Brown Boveri Strasse 6
5400 Baden (CH)

(54) **Method and device for assessing the stability of an electric power transmission network**

(57)   In a method and devices for assessing the stability of an electric power network, for each of a plurality of measurement locations with associated voltage and current measurements, a normalized power margin value dSn is computed, which is defined as a result of dividing an associated power margin value by an associated maximum allowable power flow. In a preferred embodiment of the invention, the normalised power margin value dSn is computed from an apparent load impedance Za and a Thévenin impedance Zt, that are perceived from the measurement location, as

$$dSn = \left(\frac{Za\text{-}Zt}{Za\text{+}Zt}\right)^2.$$

Normalised power margin values from several measurement locations in the network therefore show power margins relative to a local maximum capacity, which makes them comparable to one another.

Fig. 1

## Description

### Field of the Invention

The invention relates to large-scale electric power transmission networks, and, more particularly, to a method and a computer program product for assessing the stability of an electric power network, and a power network stability assessment device according to the preamble of claims 1, 7, 8 and 11, respectively.

### Background of the Invention

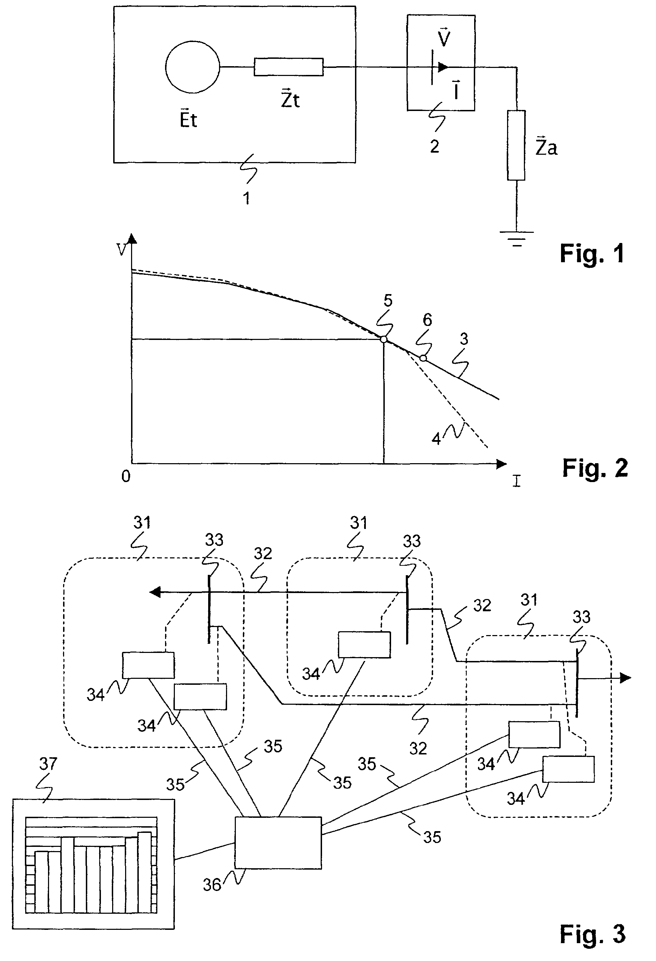

Electric power transmission and distribution systems or networks comprise high-voltage tie lines for connecting geographically separated regions, and substations for transforming voltages and for switching connections between lines. Power generation and load flow in a network with several substations is controlled by a central energy management system. An important issue in the control of a power generation and load flow is to keep the network stable, i.e. to avoid voltage collapses and swings. A method for assessing network stability, based on voltage margins, is described in the paper "Use of local measurements to Estimate Voltage-Stability Margin", K. Vu et al., Power Industry Computer Applications (PICA) May 12-16, 1997, IEEE, and in "Voltage instability predictor (VIP) and its applications", K. Vu et al., Power Systems Computation Conference (PSCC) June 1999. Both articles are herewith incorporated by reference. These articles describe a "Voltage Instability Predictor" (VIP) which measures currents and voltages locally in order to infer a proximity to voltage collapse. The concept of the VIP is shown in Figure 1. One part of an electric power system is treated as a power source, another part as a load. The power source is represented by its Thévenin equivalent 1 with a source voltage $\vec{E}t$ and a Thévenin or source impedance $\vec{Z}t$. The load is represented by an apparent load impedance $\vec{Z}a$. Both the Thévenin impedance $\vec{Z}t$ and the apparent load impedance $\vec{Z}a$ are estimated from the current and voltage measurements by a VIP device 2. The relation of these impedances, expressed by a stability margin or power margin, indicates how close the power system or network is to collapsing.

The power margin indicates, in MVA (Mega Volt Ampere), how much power can be drawn from a substation or transmitted through a tie line until the voltage collapses. If there is a plurality of VIP devices 2, it is necessary to process their associated power margin values in a manner that gives a meaningful combined representation of a state of the network. Comparing the power margin values themselves is not meaningful. That is, a power margin value of 10 MVA has another meaning for e.g. a transmission line with a rated thermal capacity of 5 kA (5000 Amperes) than in a line with a rated capacity of 1 kA.

## Description of the Invention

It is therefore an object of the invention to create a method and a computer program product for assessing the stability of an electric power network, and a power network stability assessment device of the type mentioned initially, which allow to determine local network stability margin information at a plurality of measurement locations of the network, such that said information from different measurement locations is comparable in a meaningful manner.

These objects are achieved by a method and a computer program product for assessing the stability of an electric power network, and a power network stability assessment device according to the claims 1, 7, 8 and 11, respectively.

In the inventive method, computer program product and device, for each of a plurality of measurement locations with associated voltage and current measurements, a normalized power margin value is computed, which is defined as a result of dividing an associated power margin value by an associated maximum allowable power flow. Both the power margin value stability margin and the maximum allowable power flow depend on the measured values.

Normalized power margin values from several measurement locations in the network therefore show power margins relative to a local maximum capacity, which makes them comparable to one another. This has the advantage that, in a critical situation, when the network approaches instability, a corresponding cause can be localized from locations of measurements that show a low normalized power margin. A further advantage is that the local maximum capacity is a function of an actual state of the network and varies according to the measurements. It therefore reflects the state of the network better than a rated maximum value, which remains a constant design value unrelated to reality.

In a preferred embodiment of the invention, normalized power margin values from the plurality of measurement locations in the network are represented together as a bar graph in a graphic display.

In a preferred embodiment of the invention, the power network stability assessment device is a power network stability comparison device that is configured to receive information from a plurality of measurement devices that measure voltage and current values at a plurality of measurement locations in the electric power distribution network. The power network stability comparison device comprises means to determine, for each of the plurality of measurement locations, a normalized power margin value that is defined as a result of dividing an associated power margin value by an associated maximum allowable power flow.

In another preferred embodiment of the invention, the power network stability assessment device is a power network stability estimating device that comprises means for measuring voltage and current values at a location in the electric power distribution network and means for estimating an apparent load impedance magnitude Za and an estimated Thévenin impedance magnitude Zt associated with the measurement location. It comprises means for computing a normalised power margin value dSn that is essentially equal to

$$dSn = \left(\frac{Za - Zt}{Za + Zt}\right)^2$$

Further preferred embodiments are evident from the dependent patent claims.

**Brief Description of the Drawings**

The subject matter of the invention will be explained in more detail in the following text with reference to preferred exemplary embodiments which are illustrated in the attached drawings, in which:

Figure 1    shows schematically a conceptual structure for assessing network stability, according to the state of the art;

Figure 2    is a diagram showing voltages versus current at a selected point in an electric power network;

Figure 3    schematically shows a power network with measurement and data processing devices according to the invention;

Figures 4 to 6    show a display of normalized power margins according to a first variant of the invention; and

Figure 7    shows a display of normalized power margins according to a second variant of the invention.

The reference symbols used in the drawings, and their meanings, are listed in summary form in the list of reference symbols. In principle, identical parts are provided with the same reference symbols in the figures.

**Detailed Description of Preferred Embodiments**

Figure 1 schematically shows a conceptual structure for assessing network stability, in which one part of an electric power system is treated as a power source, another part as a load. The power source is represented by its Thévenin equivalent 1 with a Thévenin or source impedance $\vec{Z}$t. The load is represented by an apparent load impedance $\vec{Z}$a. A VIP device 2 determines phasor data with a phasor measurement unit residing, for example, at a feeder at the bay level of substations or at branching points along transmission lines. A voltage phasor represents, for example, a voltage of the feeder or line, while a current phasor represents current flowing through the feeder or line.

The phasor data represents a phasor and may be a polar number, the absolute value of which corresponds to either the real magnitude or the RMS value of a quantity, and the phase argument to the phase angle at zero time. Alternatively, the phasor may be a complex number having real and imaginary parts or the phasor may use rectangular or exponential notation. Phasors may be used to represent quantities such as the voltage, current, power or energy associated with a phase conductor or an electronic circuit. By contrast, conventional sensing devices used in power networks generally measure only scalar, average representations, such as the RMS value of a voltage, current etc.

In some VIP applications, the phasor data is collected from phasor measurement units that are distributed over a large geographic area, i.e. over tens to hundreds of kilometers. For applications in which the phasor data from these disparate sources are analysed in conjunction, they must refer to a common phase reference. In other words, the different phasor measurement units must have local clocks that are synchronised to within a given precision. Such a synchronisation of the phasor measurement units is preferably achieved with a known time distribution system, for example the global positioning (GPS) system. In a typical implementation, the phasor data 9 is determined at least every 200 or every 100 or preferably every 40 milliseconds, with a temporal resolution of preferably less than 1 millisecond. In a preferred embodiment of the invention, the temporal resolution is less than 10 microseconds, which corresponds to a phase error of 0.2 degrees. Each measurement is associated with a time stamp derived from the synchronised local clock. The phasor data therefore comprises time stamp data.

The VIP assesses the stability of the electric power transmission network by determining a stability margin value pertinent to specific entities and/or a combination of entities within the network. A measure of stability is expressed in terms of impedances or, as a voltage margin, in terms of voltages. In the example described in the background of the invention, a power margin is used as a stability margin. A power margin is a more intuitive representation than a voltage or impedance margin. A local power margin represents for example the amount of power that may be transmitted through a given transmission line of the network. A global power margin combines phasor data collected from a plurality of phasor measurement units.

Figure 2 shows a plot of voltage versus current at a given point in a power network, where a VIP device is located. This may be at a feeder of a tie line or a load. When the load gets stronger, the current increases and the voltage drops. The actual future voltage versus current curve (V/I curve) is represented by the dashed line 4. The actual future behavior is influenced by the entire network, but is estimated from local measurements by the VIP device. The VIP computes provides an estimate of this curve, shown by the drawn out line 3. In particular, the slope of the curve corresponds to the magnitude $|\vec{Z}t|$ of the Thévenin impedance $\vec{Z}t$ computed by the VIP device. In the remaining text, said magnitude shall be denoted as Zt, and the magnitude of the apparent load impedance $\vec{Z}a$ as Za. Note that in the following computation of impedances, the phasors as well as the impedances are vector quantities. The computation of voltage margins, shown further on and in Figure 2, involves corresponding scalar values, i.e. magnitudes of impedances, voltages and currents.

The apparent load impedance $\vec{Z}a$ is determined from a first measurement comprising a first voltage phasor $\vec{V}1$ and a first current phasor $\vec{I}1$, a first load impedance $\vec{Z}a1$ is computed as

$$\vec{Z}a1 = \frac{\vec{V}1}{\vec{I}1} \ .$$

The Thévenin impedance $\vec{Z}t$ is estimated from the first measurement and at least one second measurement comprising a second voltage phasor $\vec{V}2$ and a second current phasor $\vec{I}2$,

$$\vec{Z}t = - \frac{\vec{V}2 - \vec{V}1}{\vec{I}2 - \vec{I}1} \ .$$

Each of the measurements represents an operating point on the actual V/I curve 4.

In order to improve an accuracy of the estimate, statistical and/or heuristical methods as shown, for example, in US patent 5,631,569, are used. The magnitude of the Thévenin impedance Zt is estimated by taking advantage of natural fluctuations in the power network, which cause measured voltages and currents to change. A RMS (root mean square) voltage and an RMS current are measured cyclically. For each cycle, an apparent load impedance is computed. The Thévenin impedance is only computed if two cycles with disparate load impedances are identified. In a preferred embodiment of US patent 5,631,569, a 10% difference in load impedance is considered useful for calculating Thévenin impedance. Successive values of the Thévenin impedance are stored and statistical data is generated and maintained for the successive values. When a standard deviation falls below one sigma, the mean of the values is displayed.

According to the invention, given a first operating point 5 with voltage magnitude Vp, current magnitude Ip and estimated Thévenin impedance magnitude Zt, any other operating point with voltage V and current I on the estimated V/I curve 3 satisfies the equation

$$(V-Vp)=-Zt(I-Ip).$$

The maximum power corresponds to an estimated maximum power operating point 6 on the estimated V/I curve 3 for which the product of current and voltage is maximal. This product is equal to

$$V \times I = (Vp - Zt \cdot Ip)I - Zt \cdot I^2$$

and the maximum of the product is equal to

$$Smax = \frac{(Vp + Zt \cdot Ip)^2}{4 \cdot Zt} \ .$$

This maximal power is the power transmitted at the maximum power operating point 6. It gives the maximum power, in MVA, that may be transmitted through said feeder or line under current network conditions.

The power margin, for a present operating point 5, is the difference between the maximum power and the power being currently transmitted. Let the present time current and voltage magnitudes be I and V, respectively. Then the present power margin or present stability margin dS corresponding to said feeder is

$$dS = \frac{(V + Zt \cdot I)^2}{4 \cdot Zt} - V \times I$$

which is equal to

$$dS = \frac{(V - Zt \cdot I)^2}{4 \cdot Zt}$$

In summary, the stability margin computation method gives, based on online current and voltage phasor measurements, a continuously adapted estimate of how much more power may be transferred through a tie line or how much more power may be drawn by a substation before the network collapses. This is particularly advantageous in situations where the network state slowly moves towards instability, without tell-tale disruptive events that would indicate a critical situation.

The normalised power margin value dSn according to the invention is

$$dSn = \frac{dS}{Smax} = \frac{(V - Zt \cdot I)^2}{(V + Zt \cdot I)^2} \ .$$

Dividing the numerator and denominator by I, and given that Za = V / I, the following result is obtained for the normalized power margin

$$dSn = \left(\frac{Za - Zt}{Za + Zt}\right)^2 .$$

This normalized power margin dSn will vary from 100% at no load to 0% at voltage collapse. Regardless of the VIP location, all normalized power margins can be easily compared to determine which locations are closer to voltage collapse.

Under normal conditions, the apparent load impedance magnitude Za is much greater than the Thévenin impedance magnitude Zt. As load increases, apparent load impedance Za correspondingly decreases, while the Thévenin impedance Zt may increase. When the impedances become equal, maximal power is delivered to the load and the system is on the verge of collapse.

If Za decreases below Zt, the system becomes voltage unstable and power delivered to the load actually decreases. Under this extreme condition, the term Za - Zt will be a negative number, but the above equation for dSn will still evaluate to a positive number. Therefore, in a preferred embodiment of the invention, in order to indicate a system condition clearly, the equation is modified as follows so that the normalized power margin is negative in the unstable region:

$$dSn' = sign(Za - Zt)\cdot \left(\frac{Za - Zt}{Za + Zt}\right)^2 ,$$

where *sign*(Za-Zt) is the signum function. Its value is 1 if the bracketed term is larger than or equal to zero, and -1 if it is smaller than zero.

In summary, the inventive method for assessing the stability of an electric power transmission or distribution network, where said network comprises a plurality of substations, buses and lines, comprises the step of

    a) measuring voltage and current values V,I at a plurality of measurement locations in the electric power network 31,32,33, and
    b) determining, for each of the plurality of measurement locations, a normalized power margin value dSn that is defined as a result of dividing an associated power margin value dS by an associated maximum allowable power flow Smax.

In different preferred variants of the invention, the normalised power margin value dSn is computed

- from measured voltages and currents and/or
- from intermediate variables such as the Thévenin impedance $\vec{Z}t$ and apparent load impedance $\vec{Z}a$ or
- from their respective magnitudes Zt,Za or
- from the power margin value dS and the maximum allowable power flow Smax.

These variants are mathematically essentially equal, as are results obtained through the different variants. As such, they all fall under the scope of the invention.

Figure 3 schematically shows a power network with measurement and data processing devices according to the invention. The power network comprises substations 31 connected by tie lines 32 and comprising busbars 33 and measurement devices 34. The measurement devices 34 are VIP devices 2 and/or phasor measurement units. They are configured to communicate through communication links 35 with a central unit 36 or power network stability comparison device 36. The central unit 36 comprises a display unit 37 or is configured to communicate with a display unit 37.

In a first preferred embodiment of the invention, measurement devices 34 transmit phasor information, that is, measured and time stamped voltage and current information through the communication links 35 to the central unit 36. The central unit 36 thus comprises means for determining, for connected measurement devices 34, the normalised power margin value dSn from their measurement values. For this first embodiment, it is sufficient that the measurement devices 34 are phasor measurement units.

In a second preferred embodiment of the invention, measurement devices 34 determine and transmit time stamped information about values of the apparent load impedance $\vec{Z}a$ and the estimated Thévenin impedance $\vec{Z}t$, or about their respective magnitudes. Accordingly, the central unit 36 comprises means for receiving, from connected measurement devices 34, said impedance information through the communication links 35 and means for computing the normalised power margin value dSn from the impedance information.

In a third preferred embodiment of the invention, measurement devices 34 determine and transmit time stamped information about values of the normalised power margin value dSn. Accordingly, the central unit 36 comprises means for receiving the normalised power margin value dSn through the communication link 35.

In a fourth preferred embodiment of the invention, measurement devices 34 determine and transmit time stamped values of phasors and of the Thévenin impedance $\vec{Z}t$ or its magnitude Zt, from which the central unit 36 computes the normalised power margin value dSn.

In a preferred embodiment of the invention, the normalized power margin values from the plurality of measurement locations and corresponding locations in the network are represented together in a graphic display, in particular as a bar graph.

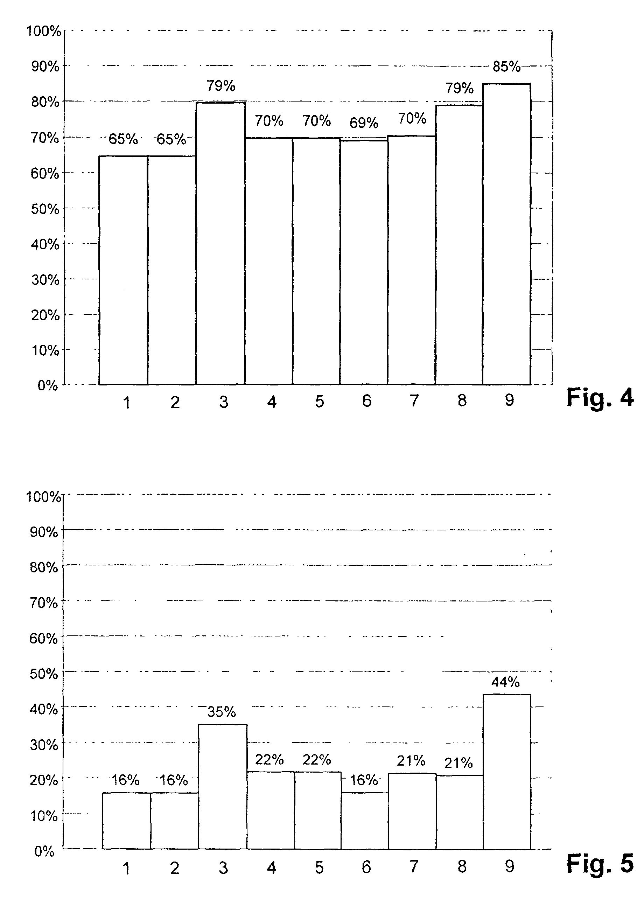

Figures 4, 5 and 6 show a display of normalized power margins dSn according to a first variant of the invention. The normalized power margins dSn from a plurality of numbered measurement locations are shown along a horizontal axis. Their respective values are drawn along a vertical axis from 0 to 100%, with values indicated numerically and graphically by a height of a corresponding bar. Figure 4 shows all normalized power margins dSn being fairly large, indicating that there is no imminent danger to network stability. In figure 5, stability margins throughout the network are lower than in figure 4, indicating that network stability is in danger. The measurement locations that lead to the lowest values of the normalized power margins dSn are of special interest: they indicate what part (in the topological or geographical sense) of the network is in a most critical state. This information helps an operator to plan and prioritize countermeasures such as load shedding or diverting load flow. In figure 5, the power network is on the verge of collapse.

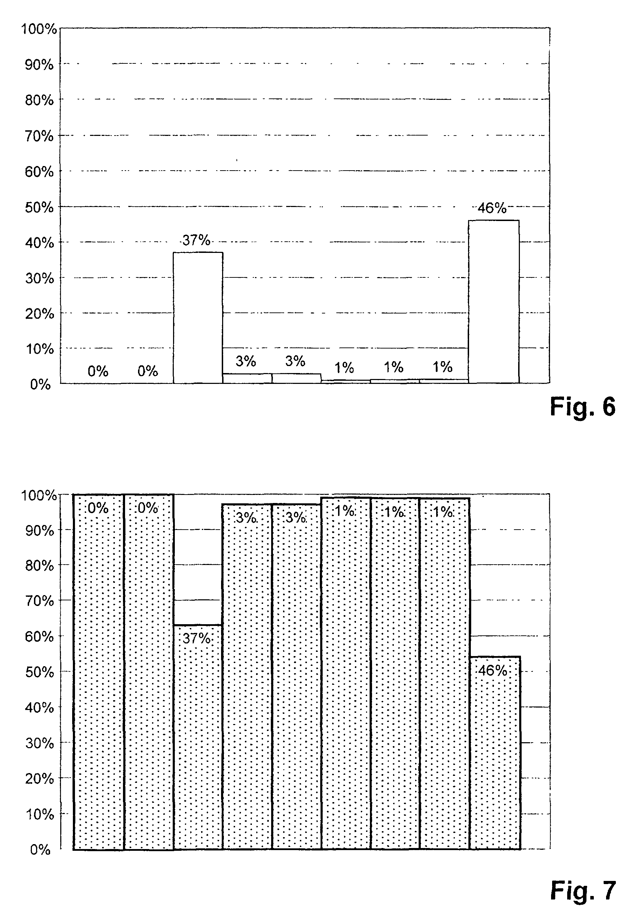

Figure 7 shows a display of normalized power margins dSn according to a second variant of the invention. Vertical bars are associated with measurement locations, but here a distance from the horizontal 100% line indicates the local power margin. In other words, the height of a bar is proportional to the amount of power corresponding to the current operating point 5, divided by the maximum allowable power flow Smax. The network state corresponding to Figure 7 is the same as for Figure 6.

A computer program product according to the invention comprises a computer readable medium, having thereon computer program code means to make, when said program is loaded, the computer execute the method according to one of the preceding claims.

**List of designations**

| 1 | Thévenin equivalent |
|---|---|
| 2 | voltage instability predictor, VIP device |
| 3 | estimated V/I curve |
| 4 | actual future V/I curve |
| 5 | operating point |
| 6 | maximum power operating point |
| 31 | substation |
| 32 | tie line |
| 33 | busbar |
| 34 | measurement device |
| 35 | communication link |
| 36 | central unit, comparison device |
| 37 | display unit |
| $\vec{V}1$ | first voltage phasor |
| $\vec{V}2$ | second voltage phasor |
| $\vec{I}2$ | first current phasor |
| $\vec{I}2$ | second current phasor |
| Vp | voltage magnitude at operating point |
| Ip | current magnitude at operating point |
| $\vec{Z}a$ | apparent load impedance |
| Za | apparent load impedance magnitude |
| $\vec{Z}t$ | Thévenin impedance |
| Zt | Thévenin impedance magnitude |
| dS | power margin value |
| dSn | normalised power margin value |
| Smax | maximum allowable power flow |

**Claims**

1. Method for assessing the stability of an electric power network, where said network comprises a plurality of substations, buses and lines, and where the method comprises the step of

   a) measuring voltage and current values V,I at a plurality of measurement locations in the electric power network (31,32,33),
   **characterised in that** the method further comprises the step of
   b) determining, for each of the plurality of measurement locations, a normalized power margin value dSn that is defined as a result of dividing an associated power margin value dS by an associated maximum allowable power flow Smax, where both the power margin value stability margin dS and the maximum allowable power flow Smax depend on the measured values V,I.

2. Method according to claim 1, **characterised in that**, for each of the plurality of measurement locations, an apparent load impedance Za and an estimated Thévenin impedance Zt are estimated and that the normalised power margin value dSn is computed as being essentially equal to

$$dSn = \left(\frac{Za - Zt}{Za + Zt}\right)^2.$$

3. Method according to claim 1, **characterised in that** the maximum allowable power flow Smax is defined as

$$Smax = \frac{(V+Zt{\cdot}I)^2}{4{\cdot}Zt}$$

   where V is a measured current, I is a measured voltage and Zt is an estimated Thévenin impedance of the network.

4. Method according to claim 1, **characterised in that** the power margin value dS is defined as

$$dS = \frac{(V-Zt \cdot I)^2}{4 \cdot Zt}$$

where V is a measured current, I is a measured voltage and Zt is an estimated Thévenin impedance of the network.

5. Method according to claim 1, **characterised in that** normalized power margin values from the plurality of measurement locations in the network are represented together in a graphic display.

6. Method according to claim 5, **characterised in that** normalized power margin values from the plurality of measurement locations in the network are displayed together in a bar graph.

7. A computer program product comprising computer program code means to make, when said program is loaded, the computer execute the method according to one of the preceding claims.

8. Power network stability assessment device, wherein the assessment device is a comparison device (36) that is configured to receive information from a plurality of measurement devices (34) that measure voltage and current values at a plurality of measurement locations in an electric power network (31,32,33), **characterized in that** the power network stability comparison device (36) comprises means to determine, for each of the plurality of measurement locations, a normalized power margin value dSn that is defined as a result of dividing an associated power margin value dS by an associated maximum allowable power flow Smax.

9. Device according to claim 8, **characterised in that** the means to determine, for each of the plurality of measurement locations, the normalised power margin value dSn, comprise means for receiving the normalised power margin value dSn through a communication link (35).

10. Device according to claim 8, **characterised in that** the means to determine, for each of the plurality of measurement locations, the normalised power margin value dSn, comprises means for receiving information about an estimated apparent load impedance Za and an estimated Thévenin impedance Zt through a communication link (35) and means for computing the normalised power margin value dSn that is essentially equal to

$$dSn = \left(\frac{Za - Zt}{Za + Zt}\right)^2 .$$

11. Power network stability assessment device, wherein the stability assessment device is a stability estimating device that comprises means for measuring voltage and current values at a location in an electric power network (31,32,33), and means for estimating an apparent load impedance Za and an estimated Thévenin impedance Zt associated with the measurement location, **characterised in that** it comprises means for computing a normalised power margin value dSn that is essentially equal to

$$dSn = \left(\frac{Za - Zt}{Za + Zt}\right)^2 .$$

**Fig. 1**

**Fig. 2**

**Fig. 3**

Fig. 4

Fig. 5

**Fig. 6**

**Fig. 7**

European Patent
Office

**EUROPEAN SEARCH REPORT**

Application Number

EP 00 81 1241

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | JULIAN, D. E., ET AL: "Quantifying proximity to voltage collapse using the Voltage Instability Predictor (VIP)" POWER ENGINEERING SOCIETY SUMMER MEETING IEEE, [Online] vol. 2, July 2000 (2000-07), pages 931-936, XP002172629 Seattle, WA, USA Retrieved from the Internet: <URL:http://IEEEXPLORE.IEEE.ORG/lpdocs/epic03/VadvSearch.htm> * the whole document * | 1-11 | H02J3/24 |
| A | G. C. PAAP: "Symmetrical components in time domain and their application to power network calculation" IEEE TRANSACTIONS ON POWER SYSTEMS, [Online] vol. 15, no. 2, May 2000 (2000-05), pages 522-528, XP002172855 Retrieved from the Internet: <URL:http://IEEEXPLORE.IEEE.ORG/lpdocs/epic03/VadvSearch.htm> * page 526, paragraph 4 * | 1-11 | TECHNICAL FIELDS SEARCHED (Int.Cl.7) H02J |

The present search report has been drawn up for all claims

| Place of search | Date of completion of the search | Examiner |
|---|---|---|
| THE HAGUE | 24 July 2001 | Marannino, E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)